# EUROPÄISCHE PATENTSCHRIFT

(11) **EP 3 239 911 B1**
(45) Veröffentlichungstag und Bekanntmachung des Hinweises auf die Patenterteilung: **10.04.2019**
(21) Anmeldenummer: 17167448.4
(22) Anmeldetag: 21.04.2017
(51) Int. Cl.: G06Q 20/10, G06Q 20/34, H04L 29/06, G07F 7/10

(54) **VERFAHREN ZUR ÜBERTRAGUNG VON VERTRAULICHEN NACHRICHTEN**
METHOD FOR TRANSMITTING CONFIDENTIAL MESSAGES
MÉTHODE DE TRANSMISSION DE MESSAGES CONFIDENTIELS

(30) Priorität: 28.04.2016 DE 102016107913
(43) Veröffentlichungstag der Anmeldung: 01.11.2017
(73) Patentinhaber: Deutscher Genossenschafts-Verlag eG, 65191 Wiesbaden (DE)
(72) Erfinder: Sturm, Harald, 65527 Niedernhausen (DE)
(74) Vertreter: WSL Patentanwälte Partnerschaft mbB

(56) Entgegenhaltungen:
- EP-A1- 1 703 479
- WO-A1-2015/044162
- US-A1- 2003 188 158
- Volksbank Bautzen Eg: "Fragen und Antworten zu Sm@rt-TAN plus", , 19. Juli 2011 (2011-07-19), XP055382394, Gefunden im Internet: URL:https://www.volksbank-bautzen.de/conte nt/dam/f0963-0/pdf-dokumente/anleitungen/f ragen_und_antwortenzusmrt-tanplus.pdf [gefunden am 2017-06-16]
- Israel Koren: "Introduction to Cryptography Part 13 Key Establishment", , 8 April 2015 (2015-04-08), XP055477342, Retrieved from the Internet: URL:http://euler.ecs.umass.edu/ece597/pdf/ Crypto-Part13-Key.pdf [retrieved on 2018-05-22]

## Beschreibung

Die vorliegende Erfindung betrifft ein Verfahren zur Übertragung von vertraulichen Nachrichten zur Übermittlung einer persönlichen Autorisierungsinformation, wie z.B. einer PIN, einer PUK oder einem Passwort, für einen Chipkarten-Halter von einem Hintergrundsystem an den Prozessorchipkarten-Halter.

Chipkarten sind mittlerweile aus dem Alltag der modernen Gesellschaft nicht mehr wegzudenken.

Bestimmte Chipkarten, nämlich Prozessorchipkarten, zeichnen sich dadurch aus, dass im Kartenkörper eine integrierte Schaltung enthalten ist, die in der Lage ist, Daten zu übertragen, zu speichern und zu verarbeiten. Dazu weist die Karte einen Mikrocontroller mit CPU, flüchtigen und nichtflüchtigen Speicher auf. Grundsätzlich kann dabei die Datenübertragung entweder über an der Oberfläche der Karte angeordnete Kontakte erfolgen oder kontaktlos durch elektromagnetische Felder. Seit kurzem kommen auch sogenannte virtuelle Chipkarten zum Einsatz, die entweder bereits in Hardware, wie z.B. Smartwatchs aber auch Laptops, integriert sind (embedded SIM) oder ein Hardware-Sicherheitsmodul (HSM) verwenden.

Ein wichtiger Vorteil der Chipkarten liegt darin, dass in ihnen Daten gegen unerwünschten Zugriff und gegen Manipulation geschützt werden können. Der Zugriff auf die Daten erfolgt ausschließlich über Schnittstellen, die vom Betriebssystem der Chipkarte und einer Sicherheitslogik gesteuert werden, so dass die geheimen Daten nur noch intern vom Rechenwerk des Chips verarbeitet werden können. Durch Verwendung von Kryptoalgorithmen wird mit Chipkarten ein handliches Sicherheitsmodul realisiert. Die wesentlichen Eigenschaften und Funktionen von Chipkarten sind in den Normen der Reihe ISO/IEC 7816 festgelegt und beschrieben.

Chipkarten-Halter können sich daher mit der Chipkarte autorisieren und beispielsweise Finanztransaktionen autorisieren.

Das System ist jedoch anfällig gegenüber Diebstahl bzw. Verlust der Chipkarte, da ohne weitere Sicherungsmaßnahmen jeder Besitzer der Chipkarte entsprechende Autorisierungen vornehmen kann.

Daher wird dem Chipkarten-Halter häufig nicht nur die Chipkarte ausgehändigt, sondern zudem eine persönliche Identifikationsnummer (auch PIN genannt) oder ein Passwort übergeben. Auch wenn im Folgenden nur von der PIN die Rede ist, sollen im Rahmen dieser Anmeldung unter dem Begriff PIN nicht nur numerische, sondern auch alphanumerische Passphrasen verstanden werden.

Zur Autorisierung ist dann nicht nur die Vorlage der Chipkarte, sondern zugleich auch die Eingabe der PIN notwendig.

Da Chipkarten in der Regel mit der Post zugestellt werden, besteht grundsätzlich die Gefahr, dass Chipkarten im Postlauf gestohlen werden. Daher wird die PIN mit getrennter Post und aus Sicherheitsgründen auch zeitlich um einige Tage versetzt verschickt.

Das getrennte Versenden des PIN-Briefs ist jedoch nicht nur aufwändig und kostenintensiv, sondern führt aufgrund der versetzten Versendung auch zu Verzögerungen bei der Einsatzbereitschaft der Chipkarte.

Es besteht daher der Bedarf nach einem Verfahren zur Übertragung von vertraulichen Nachrichten, wie zum Beispiel einer PIN, von einem Hintergrundsystem zu einem Chipkarten-Halter.

Solche Verfahren sind bereits beschrieben worden. Sie basieren jedoch regelmäßig auf bidirektionalen Übertragungen und verwenden asymmetrische Kryptografie, was jedoch den vorherigen Schlüsseltausch und die Einrichtung entsprechender Trust Center erfordert.

Aus der WO 2015/044162 A1 ist ein System ein Verfahren zum Sichern der drahtlosen Kommunikation zwischen einer mobilen Anwendung und einem Gateway bekannt. Die US 2003/188158 A1 offenbart Techniken zum Sichern von Zahlungsvorrichtungen und insbesondere Verfahren und Vorrichtungen zum Sichern von Zahlungskarten gegen externe Überwachungsattacken.

Aufgabe der vorliegenden Erfindung ist es daher, ein einfaches Verfahren bereitzustellen, das die sichere Übertragung von vertraulichen Nachrichten, wie zum Beispiel der PIN, ermöglicht.

Erfindungsgemäß wird dies gelöst durch ein Verfahren zur Übertragung von vertraulichen Nachrichten zur Übermittlung einer persönlichen Autorisierungsinformation, wie z.B. einer PIN, einer PUK oder einem Passwort, für einen Chipkarten-Halter von einem Hintergrundsystem zu einem Chipkarten-Halter mit den folgenden Schritten:
A) Bereitstellen einer Chipkarte für den Chipkarten-Halter, wobei auf der Chipkarte zumindest ein Transaktionszählerwert sowie ein individueller Schlüssel abgelegt ist,
B) Bereitstellen eines Chipkarten-Lesers für den Chipkarten-Halter,
C) Berechnen eines symmetrischen Schlüssels durch das Hintergrundsystem auf Basis zumindest des individuellen Schlüssels der Chipkarte und des Transaktionszählerwertes,
D) Verschlüsseln der vertraulichen Nachricht im Hintergrundsystem unter Verwendung des berechneten symmetrischen Schlüssels,
E) Übertragen von zumindest der verschlüsselten vertraulichen Nachricht an den Chipkarten-Leser des Chipkarten-Halters,
F) Berechnen des symmetrischen Schlüssels auf Seiten des Chipkarten-Halters auf Basis des individuellen Schlüssels der Chipkarte und des Transaktionszählerwertes,
G) Entschlüsseln der übertragenen verschlüsselten vertraulichen Nachricht mit Hilfe des berechneten symmetrischen Schlüssels auf Seiten des Chipkarten-Halters,
H) Anzeigen der entschlüsselten vertraulichen Nachricht auf einem Display des Chipkarten-Lesers.

Unter einem symmetrischen Schlüssel wird ein Schlüssel für ein symmetrisches Kryptosystem verstanden. In der Regel wird zum Verschlüsseln und Entschlüsseln derselbe Schlüssel verwendet. Es gibt auch symmetrische Kryptosysteme bei denen die verwendeten Schlüssel nicht identisch sind aber leicht voneinander berechnet werden können. Auch solche Schlüsselpaare werden unter einem symmetrischen Schlüssel verstanden. Schritt F) wird dabei von der Chipkarte, dem Chipkartenleser oder einer mit dem Chipkartenleser verbundenen Rechnereinheit durchgeführt. Mit anderen Worten erfolgt Schritt F) auf Seiten des Chipkartenhalters (clientseitig), während Schritt C) auf Seiten des Hintergrundsystems (serverseitig) erfolgt. Das Hintergrundsystem befindet sich beispielsweise an der Chipkartenausgebenden Stelle.

In einer bevorzugten Ausführungsform wird eine physische Chipkarte, d.h. keine virtuelle Chipkarte verwendet.

In einer bevorzugten Ausführungsform erfolgt in Schritt C) die Berechnung des symmetrischen Schlüssels nicht nur auf Basis des individuellen Schlüssels der Chipkarte und des Transaktionszählerwertes, sondern auch auf Basis erster Zusatzdaten. Bei dieser Ausführungsform kann es von Vorteil sein, wenn die ersten Zusatzdaten in Schritt E) an den Chipkarten-Leser übertragen werden und in Schritt F) der symmetrische Schlüssel auf Basis von zumindest des individuellen Schlüssels der Chipkarte, des Transaktionszählerwertes und der ersten Zusatzdaten berechnet wird. Dabei wird der individuelle Schlüssel der Chipkarte nicht geändert.

Die ersten Zusatzdaten können beliebige Daten, z. B. eine Zufallszahl, sein.

In einer weiteren bevorzugten Ausführungsform wird in Schritt A) eine Chipkarte bereitgestellt, auf der zusätzlich weitere Kartendaten abgelegt sind und in den Schritten C) und F) erfolgt die Berechnung des symmetrischen Schlüssels auf Basis des individuellen Schlüssels der Chipkarte, des Transaktionszählerwertes, der weiteren Kartendaten und gegebenenfalls der ersten Zusatzdaten.

Die Schritte C) und F) verwenden dasselbe Berechnungsverfahren, welches nicht geheim sein muss. Der symmetrische Schlüssel kann mit dem bekannten Berechnungsverfahren ermittelt werden, wenn der individuelle Schlüssel der Chipkarte, der Wert des Transaktionszählers und gegebenenfalls die weiteren Kartendaten und/oder die ersten Zusatzdaten bekannt sind.

Im einfachsten Fall besteht Schritt C) aus dem in der EMV 4.3 (Spezifikation für Zahlungskarten) definierten Generate AC (generate application cryptogram)-Prozedur bestehen.

Das Verfahren hat den Vorteil, dass es ausschließlich auf bereits vorhandener und weit verbreiteter Infrastruktur aufbaut. So weisen üblicherweise Chipkarten, die für Bankgeschäfte verwendet werden, bereits einen Transaktionszählerwert (ATC-Zählerstand) sowie einen individuellen Schlüssel (TAN-AC-Schlüssel) auf.

Dabei ist der Transaktionszählerwert ein Zähler, der zumindest dann erhöht wird, wenn der individuelle Schlüssel zur Berechnung einer TAN und/oder zum Entschlüsseln verwendet wird. Des Weiteren ist es mittlerweile bei einer Vielzahl von Banken üblich, die einzelnen Chipkarten-Halter mit entsprechenden Chipkarten-Lesern, sogenannten Secodern, auszustatten. Häufig werden die Chipkarten zusammen mit dem Chipkarten-Leser verwendet, um Transaktionscodes, in der Regel Transaktionsnummern (TAN), zu erzeugen.

So hat sich beispielsweise in den letzten Jahren das sogenannte chipTAN-Verfahren durchgesetzt, bei dem die benötigte TAN erst dann generiert wird, wenn sie benötigt wird. Diese TAN gilt dann nur für einen bestimmten Auftrag und hat eine zeitlich begrenzte Gültigkeit. Beim chipTAN-Verfahren werden beispielsweise Überweisungsdaten nach Anmeldung im Online-Banking (hier ist in der Regel die Eingabe einer Benutzerkennung und einer Online-PIN notwendig) vom Chipkarten-Halter erfasst. Nach der Erfassung der Überweisungsdaten werden im Online-Banking diese an das Hintergrundsystem versendet.

Da grundsätzlich jedoch die Gefahr besteht, dass sich unberechtigte Dritte Zugang zum Online-Banking-System verschafft (z. B. mittels eines Man-in-the-Middle-Angriffs) haben und einen vom Kontoinhaber nicht gewünschten Überweisungsauftrag übermitteln, ist nun noch die Eingabe einer entsprechenden TAN notwendig.

Die Überweisungsdaten werden daher im chipTAN-Verfahren vom Hintergrundsystem umgerechnet und über das Online-Banking, zum Beispiel in Form eines Flickercodes, übertragen. Der Chipkarten-Halter steckt seine Chipkarte in den Chipkarten-Leser, der zusätzlich in der Lage ist, den Flickercode zu lesen. Die Überweisungsdaten werden dann am Chipkarten-Leser angezeigt und können vom Chipkarten-Halter überprüft werden. Sind die Daten korrekt, bestätigt dies der Chipkarten-Halter per Knopfdruck am Chipkarten-Leser. Auf der Chipkarte wird nun eine individuelle Transaktionsnummer (TAN) berechnet. Zur Berechnung der Transaktionsnummer verwendet die Chipkarte den individuellen Schlüssel sowie den Transaktionszählerwert, gegebenenfalls die weiteren Kartendaten und gegebenenfalls zusätzlich die übertragenen Überweisungsdaten. Der Vollständigkeit halber sei hier angemerkt, dass es weitere Transaktionstypen neben den beschriebenen Überweisungen gibt, was jedoch für die vorliegende Erfindung keine Rolle spielt.

Die derart berechnete Transaktionsnummer wird dann über das Online-Banking eingegeben und an das Hintergrundsystem übertragen. Das Hintergrundsystem kennt den individuellen Schlüssel und die gegebenenfalls vorhandenen weiteren Kartendaten und natürlich die übertragenen Überweisungsdaten. Sofern das Hintergrundsystem auch den Transaktionszählerwert kennt, kann das Hintergrundsystem die individuelle TAN ebenfalls berechnen und mit der übertragenen TAN vergleichen. Stimmen die TAN-Werte überein, so ist sichergestellt, dass die Überweisung autorisiert worden ist.

Da der Transaktionszählerwert von der Chipkarte jedes Mal dann erhöht werden kann, wenn die Chipkarte verwendet wird, kann es sein, dass der im Hintergrundsystem gespeicherte Transaktionszählerwert nicht mit dem tatsächlichen Transaktionszählerwert übereinstimmt. In der Regel weichen diese jedoch nur geringfügig voneinander ab. Stimmt daher die im Hintergrundsystem errechnete Transaktionsnummer nicht mit der eingegebenen Transaktionsnummer überein, so nimmt das Hintergrundsystem an, dass der tatsächliche Transaktionszählerwert um 1 größer ist als der im Hintergrundsystem gespeicherte Transaktionszählerwert und berechnet die TAN neu. Gibt es auch jetzt keine Übereinstimmung, so wird der im Hintergrundsystem gespeicherte Transaktionszählerwert erneut um 1 erhöht und die Berechnung erneut durchgeführt und dies solange wiederholt bis entweder die vom Hintergrundsystem berechnete Transaktionsnummer mit der eingegebenen Transaktionsnummer übereinstimmt oder eine bestimmte Anzahl von Wiederholungsschritten durchgeführt ist, ohne dass es zu einer Übereinstimmung kam. Im letzteren Fall gilt die Überweisung als nicht autorisiert und wird nicht durchgeführt.

Diese bestehende Infrastruktur macht sich die vorliegende Erfindung zunutze. Um beispielsweise die PIN als vertrauliche Nachricht zu übertragen, wird im Hintergrundsystem statt einer TAN ein symmetrischer Schlüssel berechnet, der dann verwendet wird, um im Hintergrundsystem die vertrauliche Nachricht zu verschlüsseln.

Die ersten Zusatzdaten werden dann zusammen mit der verschlüsselten Nachricht an den Chipkarten-Leser übermittelt. Dann wird auch auf Seiten des Chipkarten-Halters durch die Chipkarte der symmetrische Schlüssel auf Basis des individuellen Schlüssels der Chipkarte, des Transaktionszählerwertes und der ersten Zusatzdaten, die übermittelt worden sind, berechnet. Die Berechnung kann entweder in Chipkarte oder in dem Chipkartenleser erfolgen. Vorzugsweise erfolgt die Berechnung in dem Chipkartenleser, da dann die bestehende Infrastruktur nicht geändert werden muss. Dabei kann aber ein Teil der Berechnung in der Chipkarte erfolgen.

Mit Hilfe des derart berechneten symmetrischen Schlüssels kann die vertrauliche Nachricht entschlüsselt werden. Die Entschlüsselung gelingt nur, wenn auf Seiten des Chipkarten-Halters der individuelle Schlüssel der Chipkarte (ist auf der Chipkarte gespeichert), der Transaktionszählerwert (ist auf der Chipkarte gespeichert), gegebenenfalls die zusätzlichen Kartendaten (können bei der Herstellung der Karte vorgegeben werden) und die ersten Zusatzdaten (werden vom Hintergrundsystem übertragen) mit denen übereinstimmen, die bei der Verschlüsselung vom Hintergrundsystem verwendet worden sind.

In einer bevorzugten Ausführungsform des Verfahrens wird nach erfolgter Entschlüsselung der vertraulichen Nachricht ein Transaktionscode, in der Regel eine Transaktionsnummer, von dem Chipkarten-Halter an das Hintergrundsystem übermittelt. Dies erfolgt am besten über den Online-Banking-Zugang. Durch diese Übermittlung eines gültigen Transaktionscodes weiß auch das Hintergrundsystem, dass die vertrauliche Nachricht zuverlässig zugestellt und gelesen worden ist.

Wenn im Folgenden von einer TAN (=Transaktionsnummer) die Rede ist, soll dies immer sowohl numerische als auch alphanumerische Codes umfassen, auch wenn in der Regel die TAN eine numerische Zahl ist.

Damit der Chipkarten-Halter den Transaktionscode an das Hintergrundsystem übertragen kann, muss dieser zunächst an den Chipkarten-Halter übermittelt werden. Dies kann beispielsweise im Voraus per Post im Rahmen einer TAN-Liste erfolgen. Alternativ kann die Übermittlung auch mittels eines pushTAN- oder smsTAN-Verfahrens erfolgen. Beim pushTAN-Verfahren wird die entsprechende Transaktionsnummer vom Hintergrundsystem an eine entsprechende App eines mobilen Gerätes des Chipkarten-Halters übermittelt.

Beim smsTAN-Verfahren wird die Transaktionsnummer als SMS auf das Mobilfunkgerät des Chipkarten-Halters übertragen.

Am besten erfolgt die Übertragung jedoch mit Hilfe des oben genannten chipTAN-Verfahrens, d.h. die Transaktionsnummer wird aus dem individuellen Schlüssel, dem Transaktionszählerwert, gegebenenfalls der zusätzlichen Kartendaten und gegebenenfalls zweiter Zusatzdaten von der Chipkarte berechnet.

Dabei ist in einer bevorzugten Ausführungsform vorgesehen, dass die entschlüsselte Nachricht als zweite Zusatzdaten verwendet wird. Alternativ könnten auch die ersten Zusatzdaten als zweite Zusatzdaten verwendet werden.

Die ersten Zusatzdaten sollten vorzugsweise bei jeder Übertragung vom Hintergrundsystem geändert werden. Beispielsweise können die Daten zumindest zu einem Teil zufällig erzeugt werden.

Um die Sicherheit des Systems zu erhöhen, erfolgt die Übertragung des Transaktionscodes von dem Chipkarten-Halter an das Hintergrundsystem innerhalb eines Systems, das eine Authentifizierung des Chipkarten-Halters erfordert, die nicht allein auf der Chipkarte beruht. Beispielsweise kann das bereits bekannte Online-Banking-System des Chipkarten-Halters verwendet werden, bei dem sich der Chipkarten-Halter völlig ohne eine Information, die auf der Chipkarte hinterlegt ist, anmelden kann. Wenn über dieses System die entsprechende Transaktionsnummer übertragen wird, weiß das Hintergrundsystem, dass der Absender Zugang zum Online-Banking-System des Chipkarten-Halters hat und zudem im Besitz von sowohl dem Chipkarten-Leser als auch der ihm zuordenbaren Chipkarte ist.

Diese Online-Banking-Systeme verlangen in der Regel die Authentifizierung des Chipkarten-Halters durch Übermitteln eines Passwortes (Online-PIN) an das Hintergrundsystem. Die Übermittlung erfolgt dabei vorzugsweise mit Hilfe eines sicheren Übertragungsprotokolls, zum Beispiel über eine https-verschlüsselte Internetverbindung.

Wie bereits ausgeführt, wird sowohl im Hintergrundsystem als auch von der Chipkarte der symmetrische Schlüssel berechnet. Die Berechnung des symmetrischen Schlüssels beruht auf den zuvor genannten Daten. Um eine Entschlüsselung auf Seiten der Chipkarte zu bewerkstelligen, ist es daher notwendig, dass das Hintergrundsystem und die Chipkarte Zugriff auf denselben individuellen Schlüssel, denselben Transaktionszählerwert und die ersten Zusatzdaten haben. In Bezug auf den individuellen Schlüssel der Chipkarte ist dies immer gegeben. Zwar ist die Chipkarte zunächst nicht im Besitz der ersten Zusatzdaten, jedoch werden diese an die Chipkarte übertragen, so dass sichergestellt ist, dass auch die Chipkarte von denselben Zusatzdaten ausgeht. Der Transaktionszählerwert auf der Chipkarte wird von der Chipkarte selbst jeweils um 1 erhöht, ehe der Transaktionszählerwert zur Berechnung eines Transaktionscodes oder eines Schlüssels verwendet wird.

Daher ist nicht sichergestellt, dass das Hintergrundsystem den Transaktionszählerwert der Chipkarte kennt. Solange die Chipkarte noch nicht benutzt wurde, kann das Hintergrundsystem annehmen, dass der Transaktionszählerwert noch dem ursprünglich auf der Chipkarte hinterlegten Transaktionszählerwert entspricht.

Alternativ kann auf Anforderung des Hintergrundsystems chipkartenseitig der Transaktionszählerwert auch auf einen neuen Startwert gesetzt werden. Das Einstellen eines neuen Startwertes wird auch als Synchronisation bezeichnet. Weiß das Hintergrundsystem, dass eine Synchronisation erfolgt ist, kann das Hintergrundsystem den neuen Startwert des Transaktionszählerwertes zur Berechnung des Schlüssels verwenden.

Alternativ dazu kann der Chipkarten-Leser den Transaktionszählerwert auslesen und an das Hintergrundsystem übertragen. Allerdings wird hierzu eine bidirektionale Verbindung zwischen Chipkarten-Leser und Hintergrundsystem benötigt. Diese kann vermieden werden, wenn der Chipkarten-Halter mittels des Chipkarten-Lesers den Wert des Transaktionszählers ausliest und über das Onlinebanking-System dem Hintergrundsystem mitteilt.

Eine weitere Möglichkeit, dem Hintergrundsystem den Transaktionszählerwert mitzuteilen, besteht darin, dem Verfahren eine TAN gesicherte Anmeldetransaktion vorzuschalten. So könnte beispielsweise die Anmeldung im Online-Banking-System die Eingabe einer entsprechenden TAN bedingen. Hierzu wird ein Startwert vom Hintergrundsystem zum Chipkarten-Leser, zum Beispiel über Bereitstellung eines entsprechenden Flickercodes, übermittelt, so dass die Chipkarte aus dem übermittelten Startwert, dem individuellen Schlüssel und dem Transaktionszählerwert einen entsprechenden Transaktionscode berechnet, der über das Online-Banking-System an das Hintergrundsystem übermittelt wird.

Wie bereits oben beschrieben worden ist, ist im Hintergrundsystem der Transaktionszählerwert der Karte gespeichert, der bei der letzten Verbindung der Chipkarte mit dem Hintergrundsystem bestand. In der Regel wird der aktuelle Transaktionszählerwert nicht allzu sehr von dem im Hintergrundsystem gespeicherten Transaktionszählerwert abweichen. Das Hintergrundsystem wiederholt somit die Berechnung des Transaktionscodes auf Basis des übermittelten Startwertes, dem individuellen Schlüssel der Chipkarte und dem zuletzt gespeicherten Transaktionszählerwert. Stimmen die Transaktionscodes nicht überein, wiederholt das Hintergrundsystem die Berechnung auf Basis eines um 1 erhöhten Transaktionszählerwertes. Dies wird solange wiederholt, bis entweder der vom Hintergrundsystem berechnete Transaktionscode mit dem eingegebenen Transaktionscode übereinstimmt oder eine bestimmte Anzahl von Wiederholungen erreicht ist.

Stimmt der vom Hintergrundsystem berechnete Transaktionscode mit dem übermittelten Transaktionscode überein, weiß das Hintergrundsystem, welchen Wert der Transaktionszähler der Chipkarte innehat, und kann diesen zur Berechnung des symmetrischen Schlüssels verwenden.

Das beschriebene Verfahren ist sehr einfach und kann auch mit nur unidirektional gekoppelten Lesern verwendet werden, um vertrauliche Nachrichten auf Basis symmetrischer Kryptografie ohne expliziten Schlüsselaustausch zu übertragen.

Folgende Vorteile werden hierdurch erreicht:
- Entfall des expliziten Schlüsselaustausches
- weitest gehende Weiternutzung bereits vorhandener Funktionen,
- geeignet für unidirektionale Übertragung,
- die übertragenen Nachrichten sind stets vertraulich,
- bei geeigneter Beschränkung der Länge der Nachrichten können bestehende chipTAN-Protokolle unverändert beibehalten werden,
- keine PKI (public-key-Infrastruktur) und kein Trust Center notwendig,
- geringe Anforderung an die Chipkarten-Leser-Hardware, da symmetrische Basisalgorithmen (z.B. AES) einfacher und schneller ausführbar sind als die diskrete Exponentialfunktion mit den nach "oben" offenen RSA-Schlüssellängen asymmetrischer Verfahren.

Weitere Vorteile, Merkmale und Anwendungsmöglichkeiten werden deutlich anhand der folgenden Beschreibung bevorzugter Ausführungsformen.

Die beschriebenen Anwendungsfälle sollen lediglich exemplarisch die Bandbreite der möglichen Funktionalität aufzeigen und sind daher nicht vollständig.

Im Folgenden wird das System für die Übertragung einer PUK ("Person Unblocking Key") beschrieben. Dabei wird im Folgenden vorausgesetzt, dass dem Hintergrundsystem der Wert des Transaktionszählers der Karte bekannt ist, so dass sowohl Hintergrundsystem als auch Chipkarten-Leser auf denselben Wert des Transaktionszählers zugreifen. Wie dies im Einzelnen realisiert werden kann, ist bereits oben beschrieben worden.

Zur Übertragung der vertraulichen PUK meldet sich der Chipkarten-Halter zunächst im Online-Banking-System an und steckt seine Chipkarte in den Chipkarten-Leser.

Falls dem Hintergrundsystem der Wert des Transaktionszählers nicht bekannt ist, ist es möglich, dass der Chipkarten-Leser den Wert des Transaktionszählers über das Online-Banking-System dem Hintergrundsystem übermittelt. Dies verlangt jedoch in den meisten Fällen eine Modifikation der bestehenden Infrastruktur.

Im nächsten Schritt wird über das Online-Banking-System die Übertragung der Nachricht angefordert.

Das Hintergrundsystem erzeugt die ersten zusätzlichen Daten, die beispielsweise eine Zufallszahl enthalten können.

Die ersten zusätzlichen Daten könnten aus einer Kennzahl für das verwendete Verfahren, zum Beispiel "3", eine Indexzahl, zum Beispiel die Ziffern 00 bis 99, wobei beispielsweise die Ziffer 02 für die PUK steht und eine fünfstellige Zufallszahl, ausgewählt sein. Beispielsweise könnte so der Startcode bzw. die ersten zusätzlichen Daten aus der Ziffernfolge "302 55 5555" bestehen.

Das Hintergrundsystem kann nun zunächst auf Basis des Transaktionszählers, des individuellen Schlüssels und der ersten zusätzlichen Daten den symmetrischen Schlüssel berechnen. Die gewünschte Nachricht, z.B. die PUK, kann nun mit Hilfe des Schlüssels beispielsweise mittels AES-Verschlüsselung verschlüsselt werden. Als Nächstes wird ein Datenblock gebildet, der zum einen aus den ersten zusätzlichen Daten und zum anderen aus der verschlüsselten Nachricht besteht. Dieser wird an den Chipkarten-Leser übertragen. Die Übertragung erfolgt beispielsweise über das Online-Banking-System mittels Flicker-Code.

Gegebenenfalls kann das Hintergrundsystem bereits jetzt die zu erwartende TAN berechnen. Dabei ist jedoch zu berücksichtigen, dass sich der Wert des Transaktionszählers bei der Entschlüsselung erhöht, so dass die zu erwartende TAN auf Basis des erhöhten Wertes des Transaktionszählers berechnet wird. In den Fällen, in denen die Chipkarte den Zähler nur bei Berechnung einer TAN nicht aber bei Berechnung eines Schlüssels erhöht, muss natürlich der Transaktionszählerwert nicht erhöht werden.

Der Chipkarten-Leser sendet dann den Befehl "Generate AC" an die Chipkarte. Die Chipkarte erzeugt dann auf Basis des individuellen Schlüssels und des Wertes des Transaktionszählers ein sogenanntes Application-Kryptogramm. Bei dem bekannten chip-TAN-Verfahren wird aus diesem Application-Kryptogramm und den zusätzlichen Daten die TAN berechnet und zwar in der Regel mit Hilfe einer Hashwertbildung. Dieser Schritt kann hier jedoch entfallen.

Im Chipkarten-Leser erfolgt dann die gleiche Berechnung des symmetrischen Schlüssels wie im Hintergrundsystem. Dabei wird auf das Application-Kryptogramm und die zusätzlichen Daten zurückgegriffen. Aufgrund der Symmetrie des Schlüssels kann mit dem symmetrischen Schlüssel die verschlüsselte Nachricht entschlüsselt werden.

Im Anschluss an die erfolgreiche Entschlüsselung werden die entschlüsselten Daten auf einem Display des Chipkarten-Lesers angezeigt.

Danach berechnet der Chipkarten-Leser eine TAN auf Basis des Application-Kryptogramms und der angezeigten Daten anstelle der zusätzlichen Daten.

Ist die eingegebene TAN korrekt, d.h. stimmt sie mit der vom Hintergrundsystem erwarteten TAN überein, so liegt eine aktive elektronische Empfangsbestätigung vor.

Durch das beschriebene Verfahren können zusätzlich folgende Funktionen verwirklicht werden:
- vertrauliche (Wieder-)Freischaltung einer "wiedergefundenen" Karte, so dass in diesem Fall auf die Ausgabe von neuen Karten verzichtet werden könnte,
- vertrauliche, verschlüsselte PIN-Übertragung (elektronischer PIN-Brief), was den Bereitstellungsprozess aufgrund des fehlenden Versatzes zwischen Versand von Karte und PIN-Brief beschleunigt, wodurch Portokosten eingespart werden, wodurch das Versand- und Kompromittierungsrisiko entfällt, da kein PIN-Brief auf dem Postweg verloren oder kompromittiert werden kann, wodurch der korrekte Empfang der PIN vom im Online-Banking autorisierten Chipkarten-Halter nachgewiesen ist,
- vertrauliche, verschlüsselte Übertragung der Karten-PUK (elektronischer PUK-Brief),
- vertrauliche sonstige Informationsabfragen,
- elektronische Empfangs- und Lesebestätigungen.

## Patentansprüche

1. Verfahren zur Übertragung von vertraulichen Nachrichten zur Übermittlung einer persönlichen Autorisierungsinformation, wie z.B. einer PIN, einer PUK oder einem Passwort, für einen Chipkarten-Halter von einem Hintergrundsystem an den Chipkarten-Halter mit den folgenden Schritten:
A) Bereitstellen einer Chipkarte für den Chipkarten-Halter, wobei auf der Chipkarte zumindest ein Transaktionszählerwert sowie ein individueller Schlüssel abgelegt sind,
B) Bereitstellen eines Chipkarten-Lesers für den Chipkarten-Halter,
C) Berechnen eines symmetrischen Schlüssels durch das Hintergrundsystem auf Basis von zumindest des individuellen Schlüssels der Chipkarte und des Transaktionszählerwertes,
D) Verschlüsseln der vertraulichen Nachricht im Hintergrundsystem unter Verwendung des berechneten symmetrischen Schlüssels,
E) Übertragen von zumindest der verschlüsselten vertraulichen Nachricht vom Hintergrundsystem an den Chipkarten-Leser des Chipkarten-Halters,
F) Berechnen des symmetrischen Schlüssels auf Seiten des Chipkarten-Halters auf Basis des individuellen Schlüssels der Chipkarte und des Transaktionszählerwertes,
G) Entschlüsseln der übertragenen verschlüsselten vertraulichen Nachricht mit Hilfe des berechneten symmetrischen Schlüssels auf Seiten des Chipkarten-Halters,
H) Anzeigen der entschlüsselten vertraulichen Nachricht auf einem Display des Chipkarten-Lesers.

2. Verfahren nach Anspruch 1, **dadurch gekennzeichnet, dass** in Schritt C) der symmetrische Schlüssel durch das Hintergrundsystem auf Basis von zumindest des individuellen Schlüssels der Chipkarte, des Transaktionszählerwertes und erster Zusatzdaten erfolgt, wobei die ersten Zusatzdaten in Schritt E) an den Chipkarten-Leser übertragen werden und in Schritt F) der symmetrische Schlüssel auf Basis von zumindest des individuellen Schlüssels der Chipkarte, des Transaktionszählerwertes und der ersten Zusatzdaten berechnet wird.

3. Verfahren nach Anspruch 1 oder 2, **dadurch gekennzeichnet, dass** in Schritt A) eine Chipkarte bereitgestellt wird, auf der zusätzlich weitere Kartendaten abgelegt sind und dass in den Schritten C) und F) die Berechnung des symmetrischen Schlüssels auf Basis des individuellen Schlüssels der Chipkarte, des Transaktionszählerwertes, der weiteren Kartendaten und gegebenenfalls der ersten Zusatzdaten erfolgt.

4. Verfahren nach einem der Ansprüche 1 bis 3, **dadurch gekennzeichnet, dass** nach Schritt H) folgt:
I) Übertragen eines Transaktionscodes von dem Chipkarten-Halter an das Hintergrundsystem.

5. Verfahren nach Anspruch 4, **dadurch gekennzeichnet, dass** der Transaktionscode mittels eines pushTAN-, smsTAN- oder chipTAN-Verfahrens an den Chipkarten-Halter übermittelt wird.

6. Verfahren nach Anspruch 4, **dadurch gekennzeichnet, dass** der Transaktionscode aus dem individuellen Schlüssel, dem Transaktionszählerwert und gegebenenfalls der weiteren Kartendaten sowie gegebenenfalls zweiter Zusatzdaten von der Chipkarte berechnet wird, wobei vorzugsweise die zweiten Zusatzdaten die vertrauliche Nachricht sind oder diese zumindest teilweise enthalten.

7. Verfahren nach einem der Ansprüche 4 bis 6, **dadurch gekennzeichnet, dass** Schritt I) eine Authentifizierung des Chipkarten-Halters, die nicht allein auf der Chipkarte beruht, enthält.

8. Verfahren nach Anspruch 7, **dadurch gekennzeichnet, dass** die Authentifizierung des Chipkarten-Halters durch Übermitteln eines Passwortes an das Hintergrundsystem erfolgt, wobei die Übermittlung vorzugsweise mit Hilfe eines sicheren Übertragungsprotokoll, z.B. über eine verschlüsselte Internetverbindung, erfolgt.

9. Verfahren nach einem der Ansprüche 1 bis 8, **dadurch gekennzeichnet, dass** vor Schritt C) der Transaktionszählerwert aus der Chipkarte ausgelesen und zum Hintergrundsystem übertragen wird.

10. Verfahren nach einem der Ansprüche 4 bis 8, **dadurch gekennzeichnet, dass** die Chipkarten den Transaktionszählerwert um einen vorbestimmten Wert erhöht, wenn der Transaktionszählerwert zur Berechnung eines Transaktionscodes oder eines Schlüssels verwendet worden ist, wobei vor Schritt C) eine Transaktionscode gesicherte Anmeldetransaktion durchgeführt wird, bei der ein Startwert vom Hintergrundsystem zum Chipkarten-Leser übermittelt wird, die Chipkarte aus dem Startwert, dem individuellen Schlüssels und dem Transaktionszählerwert einen Transaktionscode berechnet, wobei der Transaktionscode an das Hintergrundsystem übermittelt wird und das Hintergrundsystem den Transaktionszählerwert aus dem Transaktionscode berechnet, wobei das Hintergrundsystem in Schritt C) die Summe aus dem berechneten Transaktionszählerwert und dem vorbestimmten Wert als Transaktionszählerwert verwendet.

## Claims

1. A method of transmitting confidential messages for communicating an item of personal authorisation like for example a PIN, a PUK or a password for a smart card holder from a background system to the smart card holder comprising the following steps:
A) providing a smart card for the smart card holder, wherein at least one transaction counter value and an individual key are stored on the smart card,
B) providing a smart card reader for the smart card holder,
C) calculating a symmetric key by the background system on the basis of at least the individual key of the smart card and the transaction counter value,
D) encrypting the confidential message in the background system using the calculated symmetric key,
E) transmitting at least the encrypted confidential message from the background system to the smart card reader of the smart card holder,
F) calculating the symmetric key on the part of the smart card holder on the basis of the individual key of the smart card and the transaction counter value,
G) decrypting the transmitted encrypted confidential message by means of the calculated symmetric key on the part of the smart card holder, and
H) displaying the decrypted confidential message on a display of the smart card reader.

2. A method according to claim 1 **characterised in that** in step C) the symmetric key is performed by the background system on the basis of at least the individual key of the smart card, the transaction counter value and first additional data, wherein the first additional data in step E) are transmitted to the smart card reader and in step F) the symmetric key is calculated on the basis of at least the individual key of the smart card, the transaction counter value and the first additional data.

3. A method according to claim 1 or claim 2 **characterised in that** in step A) a smart card is provided on which further card data are additionally stored and that in steps C) and F) calculation of the symmetric key is effected on the basis of the individual key of the smart card, the transaction counter value, the further card data and possibly the first additional data.

4. A method according to one of claims 1 to 3 **characterised in that** after step H) there follows:
I) transmission of a transaction code from the smart card holder to the background system.

5. A method according to claim 4 **characterised in that** the transaction code is communicated to the smart card holder by means of a pushTAN, smsTAN or chipTAN method.

6. A method according to claim 4 **characterised in that** the transaction code is calculated from the individual key, the transaction counter value and optionally the further card data and possibly second additional data by the smart card, wherein preferably the second additional data are the confidential message or at least partially contain same.

7. A method according to one of claims 4 to 6 **characterised in that** step I) contains an authentication of the smart card holder which is not based solely on the smart card.

8. A method according to claim 7 **characterised in that** authentication of the smart card holder is carried out by communicating a password to the background system, wherein the communication is preferably effected by means of a secure transmission protocol, e. g. by way of an encrypted Internet connection.

9. A method according to one of claims 1 to 8 **characterised in that** prior to step C) the transaction counter value is read from the smart card and transmitted to the background system.

10. A method according to one of claims 1 to 8 **characterised in that** the smart card increases the transaction counter value by a predetermined value when the transaction counter value has been used to calculate a transaction code or a key, wherein prior to step C) a transaction code-secured logon transaction is performed in which a start value is communicated from the background system to the smart card reader, the smart card calculates a transaction code from the start value, the individual key and the transaction counter value, wherein the transaction code is communicated to the background system and the background system calculates the transaction counter value from the transaction code, wherein the background system in step C) uses the sum of the calculated transaction counter value and the predetermined value as the transaction counter value.

## Revendications

1. Procédé de transmission de messages confidentiels permettant le transfert d'une information personnelle d'autorisation destinée à un détenteur de carte à puce, par exemple d'un code PIN, d'un code PUK ou d'un mot de passe, depuis un système d'arrière-plan vers le détenteur de carte à puce, comprenant les étapes ci-dessous consistant à :
A) fournir une carte à puce au détenteur de carte à puce, où au moins une valeur de compteur de transactions et une clé individuelle sont stockées sur la carte à puce,
B) fournir un lecteur de carte à puce au détenteur de carte à puce,
C) calculer une clé symétrique via le système d'arrière-plan, en se basant sur au moins la clé individuelle de la carte à puce et la valeur du compteur de transactions,
D) crypter le message confidentiel dans le système d'arrière-plan à l'aide de la clé symétrique calculée,
E) transmettre au moins le message confidentiel crypté du système d'arrière-plan au lecteur de carte à puce du détenteur de carte à puce,
F) calculer, du côté détenteur de carte à puce, la clé symétrique, en se basant sur la clé individuelle de la carte à puce et sur la valeur du compteur de transactions,
G) décrypter, du côté détenteur de carte à puce, le message confidentiel crypté transmis à l'aide de la clé symétrique calculée,
H) afficher le message confidentiel décrypté sur un écran du lecteur de carte à puce.

2. Procédé selon la revendication 1, **caractérisé en ce que**, à l'étape C), la clé symétrique est générée par le système d'arrière-plan en se basant sur au moins la clé individuelle de la carte à puce, la valeur du compteur de transactions et des premières données supplémentaires, où les premières données supplémentaires sont transmises au lecteur de carte à puce à l'étape E), et la clé symétrique est calculée à l'étape F) en se basant sur au moins la clé individuelle de la carte à puce, la valeur du compteur de transactions et les premières données supplémentaires.

3. Procédé selon la revendication 1 ou 2, **caractérisé en ce qu'**est mise à disposition à l'étape A) une carte à puce sur laquelle sont stockées de manière supplémentaire d'autres données de carte, et **en ce que** le calcul de la clé symétrique est effectué aux étapes C) et F) en se basant sur la clé individuelle de la carte à puce, la valeur du compteur de transactions, les autres données de carte, et éventuellement les premières données supplémentaires.

4. Procédé selon l'une des revendications 1 à 3, **caractérisé en ce qu'**il comprend, après l'étape H), l'étape ci-dessous consistant à :
I) transmettre un code de transaction du titulaire de carte à puce vers le système d'arrière-plan.

5. Procédé selon la revendication 4, **caractérisé en ce que** le code de transaction est transmis au titulaire de la carte à puce au moyen d'un procédé pushTAN, smsTAN ou chipTAN.

6. Procédé selon la revendication 4, **caractérisé en ce que** le code de transaction est calculé à partir de la clé individuelle, de la valeur du compteur de transactions et éventuellement des autres données de carte, ainsi qu'éventuellement à partir des secondes données supplémentaires de la carte à puce, les secondes données supplémentaires constituant de préférence le message confidentiel ou contenant au moins partiellement celui-ci.

7. Procédé selon l'une des revendications 4 à 6, **caractérisé en ce que** l'étape I) contient une authentification du titulaire de carte à puce qui ne repose pas uniquement sur la seule carte à puce.

8. Procédé selon la revendication 7, **caractérisé en ce que** l'authentification du titulaire de la carte à puce s'effectue par le transfert d'un mot de passe au système d'arrière-plan, le transfert s'effectuant de préférence à l'aide d'un protocole de transmission sécurisé, par exemple via une connexion internet cryptée.

9. Procédé selon l'une des revendications 1 à 8, **caractérisé en ce que** la valeur du compteur de transactions est lue sur la carte à puce et transmise au système d'arrière-plan avant l'étape C).

10. Procédé selon l'une des revendications 4 à 8, **caractérisé en ce que** la carte à puce augmente la valeur du compteur de transactions d'une valeur prédéterminée lorsque la valeur du compteur de transactions a été utilisée pour le calcul d'un code de transaction ou d'une clé, dans lequel est réalisée avant l'étape C) une transaction de connexion sécurisée par un code de transaction, au cours de laquelle une valeur de départ est transférée du système d'arrière-plan vers le lecteur de carte à puce, la carte à puce calcule un code de transaction à partir de la valeur de départ, de la clé individuelle et de la valeur du compteur de transactions, où le code de transaction est transféré au système d'arrière-plan, et le système d'arrière-plan calcule la valeur du compteur de transactions à partir du code de transaction, où le système d'arrière-plan utilise à l'étape C) la somme de la valeur du compteur de transactions calculée et de la valeur prédéterminée en tant que valeur du compteur de transactions.
